# EUROPEAN PATENT APPLICATION

(11) **EP 4 623 661 A1**
(43) Date of publication of application: **01.10.2025**
(21) Application number: 25163609.8
(22) Date of filing: 13.03.2025
(51) Int. Cl.: A01C 1/00, B02C 1/00, G01N 1/28

(54) **SEED CRUSHING DEVICE**

(30) Priority: 25.03.2024 NL 2037326
(71) Applicant: MDE Automation B.V., 4691RZ Tholen (NL)
(72) Inventor: MOERLAND, Pieter Marinus Anthonie, 4691 RZ Tholen (NL); HOOGESTEGER, Jan Jacob, 4691 RZ Tholen (NL)
(74) Representative: IP Maison

(57) **Abstract**

Seed crushing device comprising a receiving space for a seed grain, defined by one or more side walls, designed to be positioned in at least a first position, where the receiving space is freely accessible from its top side for placing the seed grain in the receiving space; and where the receiving space at its bottom is closed to support a seed grain that has been placed, and a second position, where the receiving space is freely accessible from its top side to accommodate a pestle in the receiving space, and where the receiving space at the bottom is closed for crushing the seed grain by pushing the pestle towards the bottom and for supporting the flower thus formed; and a third position, where the receiving space is free at at least the bottom for discharging the flower in a filling position from a deep well plate.

## Description

The present invention relates to a seed crushing device, also referred to as seed crusher. It is known in the art to crush seeds for various purposes. One of them is for investigation purposes of a seed breeding process, wherein the crushed seed is placed in a filling position of a so called deepwell plate. Such deepwell plate is commonly used in this technical field, for containing flower of crushed seeds. It is common to crush the seed in the deepwell plate, that is, to put it in a filling position of the plate, and to crush it with a pestle that moves into the filled position, to crush the seed grain.

At present there is a lot of manual handling involved in seed handling, which leads to relatively high costs and slow processing. Moreover, suboptimal crushing can take place in a deepwell plate due to the restrictions the fragility of the plate sets. Also, a relative high chance of making mistakes occurs with manual handling. These disadvantages occur throughout the processing chain, which extends from harvesting seed grains, selecting them for crushing, and handling the crushed flower as well as the remaining seed grains.

It is therefore a purpose of the present invention, to provide a device that takes away the disadvantages of the prior art devices. The seed crusher according to the invention is intended and designed for crushing corn seeds, and may be operated in a chain of devices, being preceded by a threshing machine and a cleaning machine.

The invention thereto proposes a seed crushing device comprising a receiving space for a seed grain, defined by one or more side walls, designed to be positioned in at least a first position, where the receiving space is freely accessible from its top side for placing the seed grain in the receiving space; and where the receiving space at its bottom is closed to support a seed grain that has been placed; a second position, where the receiving space is freely accessible from its top side to accommodate a pestle in the receiving space, and where the receiving space at the bottom is closed for crushing the seed grain by pushing the pestle towards the bottom and for supporting the flower thus formed; and a third position, where the receiving space is free at at least the bottom for discharging the flower in a filling position from a deep well plate.

Crushing the seed in a receiving space instead of in a deepwell plate has the advantage that the crushing can be done in a more controlled and reliable manner, and more importantly, with better results. The device according to the invention is a lot more robust than the deepwell plate that has to be handled with care due to its fragile construction. This not only leads to better crush results but also allows faster processing of seed grains. Furthermore it allows to quickly and efficiently fill multiple filling positions with various crushed seeds.

The pestle may be provided with a controller, for controlling its acceleration and deceleration in the direction of the bottom of the receiving space, and also its rotational speed and time during the actual crusing.It has proven that the device according to the invention is less sensitive for making mistakes, as it handles all seed grains according to predetermined protocols.

In a preferred embodiment, the receiving space can be moved by relative displacement of the receiving space with respect to at least two of:
- a discharge opening of a filling funnel opening onto the top of the receiving space, wherein in a first position the top of the receiving space is aligned with the discharge opening of the filling funnel;
- a descent position of a vertically movable pestle, wherein in a second position the top of the receiving space in the second position is aligned with the descent position of the pestle; and
- A receiving opening of a discharge channel, where in a third position the bottom of the receiving space is aligned with a receiving opening of the discharge channel.

Relative displacement means that - with respect to a fixed world - it is either possible to move the receiving space to and from positions wherein its top and/or bottom opening are covered, or to have top and/or bottom covers or equipment that are movable. The first and second position may be different positions, but these can also coincide. In the latter case, the pestle may or may not move through the filling funnel and both the filling funnel and the pestle may be movable to and from the coinciding first and second position. In a preferred embodiment however, the receiving space is movable to and from positions where it is covered at its top or bottom side where appropriate. The discharge channel may be an actual channel or funnel like structure, but it can also be very short and have (almost) zero length; that it: the receiving opening of the discharge channel is an opening in a bottom cover of the receiving space or the absence of a bottom cover, wherein flower of a crushed seed grain is discharged directly or almost directly into the filling position of the deepwell plate.

In a further embodiment of the present invention, the device comprises a carrier for a deep well plate with multiple filling positions, with the aid of which carrier the deep well plate can be moved relative to the receiving space in such a way that flower can be released in a selected filling position when the receiving space is in the third position. The carrier may move the deepwell plate from a location where it is received from a buffer or a destacker for instance, to the third position, or it may be fixed in space when receiving space is moved to its third position with respect to the fixed world.

In a preferred embodiment however this means that the carrier is at least capable to move a deepwell plate in a horizontal plane, also referred to as the X-Y plane throughout this application. As deepwell plates commonly comprise an array or matrix of filling positions, by a movement in the X-Y plane, the intended filling position of the deepwell plate can be aligned with the bottom of the receiving space and/or a discharge channel extending therefrom. The device according to the invention may be configured to subsequently or simultaneously fill multiple filling spaces of deepwell plates with flower of crushed seed grains.

In that case the carrier is (subsequently) movable in the horizontal plane in order to align a selected receiving opening of a discharge channel with the bottom of the receiving space in the third position.

In yet a further embodiment, the carrier is movable with a vertical direction component (further referred to as the Z-direction), to accommodate a discharge opening of the discharge channel in the filling position of the deep well plate when the receiving space in the third position is aligned with a discharge channel extending in a height direction for the purpose of discharging flower.

In again another embodiment, the receiving space is freely accessible from its top and bottom in the third position, and the device is further provided with an ejector, which is movable between a position in which it is located above the top of the receiving space, and a position in which it extends via the top of the receiving space through the receiving space to the discharge channel, and preferably through the discharge channel and further preferably into the filling position of a placed deep well plate.

Such ejector may assist in discharging the flower of crushed seed grains into a filling position of the deepwell plate, and furthermore in assuring that the flower is deposited on the bottom of such filling position. The ejector may for instance comprise a pin, preferably an assembly of pins, and further preferably a central pin surrounded by a number of further pins. In the latter case, the central pin pushes the flower that is centrally arranged in the receiving space into the filling position, and the surrounding pins scrape the remainers of the flower from the at least one wall of the receiving space, and transfer it to the filling position as well. This increases the efficiency and total amount of flower for investigation purposes, and it reduces the cleaning effort that has to be made before another seed grain can be crushed.

For cleaning the receiving space prior to a subsequent crushing step, the device according to invention may comprise a fourth position, in which the receiving space is open at the top and/or the bottom, so pressurised air can be blown through the receiving space. In a specific embodiment of the present invention, such air is alternatively blown in the direction from the top opening to the bottom opening and vice versa, in order to make sure no flower remainders are left in the receiving space.

In a further preferred embodiment the device according to the invention comprises a second receiving space for a seed grain defined by one or more side walls, also designed to be positioned in at least a first position, where the second receiving space is freely accessible from its top side for placing the seed grain in the second receiving space; and where the second receiving space at its bottom is closed to support a seed grain that has been placed, a second position, where the second receiving space is freely accessible from its top side to accommodate a pestle in the second receiving space, and where the second receiving space at the bottom is closed for crushing the seed grain by pushing the pestle towards the bottom and for supporting the flower thus formed; and a third position, where the second receiving space is free at at least the bottom for discharging the flower in a filling position from a deep well plate, wherein the device is configured to accommodate the pestle alternately in the first and the second receiving space.

By sharing the pestle between the first and the second receiving space, a higher throughput can be achieved. The actual crushing of a seed grain only takes place during a short part of the duty cycle from selecting a seed grain to delivering it to the filling space of a deepwell plate and cleaning the receiving space, so a device with a shared pestle is a lot more efficient than two separate devices.

Preferably therefore, the pestle is movable between the second position of the first receiving space and the second position of the second receiving space. In a practical embodiment, the pestle can be moved jointly with a first and a second ejector between a first position in which the pestle is aligned with the first receiving space and the first ejector with the second receiving space and a second position in which the pestle is aligned with the second receiving space and the second ejector with the first receiving space. This construction allows to eject flower from a first receiving space and to crush a next seed grain simultaneously. Configurations wherein the pestle and a single ejector swap positions are thinkable too.

In yet a further embodiment, the device according to the invention comprises a receiving location for a quantity of seed grains, and a picker for picking up a single seed grain from the receiving location and administering the single seed grain to a receiving space located in a first position. Such picker may make use of a vacuum suction cup to pick up a single seed.

The device may further comprise a counter for counting the number of seed grains at the receiving location, in particular comprising a camera and an image processing device for determining the number of seed grains on the basis of images made by the camera. The receiving location may for this purpose comprise an infrared illumination source. The infrared light may for instance illuminate the receiving location from underneath, through a transparent or semi-transparent support for the grain seeds. This has the advantage that the recognition of the seeds, by determining the locations where the infrared light is blocked, is not hindered by daylight influences.

For ensuring that a seed grain is actually dropped in the receiving space the device according to the invention may be provided with a funnel opening above a first position of a receiving space.

Additionally, the side walls of the receiving space may comprise several parts, which are mutually movable in order to break a crushed seed grain already contained therein. This is logically done after crushing the seed grain, but before transferring it to the filling space of a deepwell plate.

The invention will now be elucidated into more detail with reference to the following figures. Herein:
- Figure 1 shows an overview of a device according to the invention;
- Figure 2 shows a first detail of a device according to the invention;
- Figures 3 A, B show a second detail of a device according to the invention;
- Figure 4 shows a third detail of a device according to the invention; and
- Figures 5 A, B, C show various positions of a receiving space according to the invention.

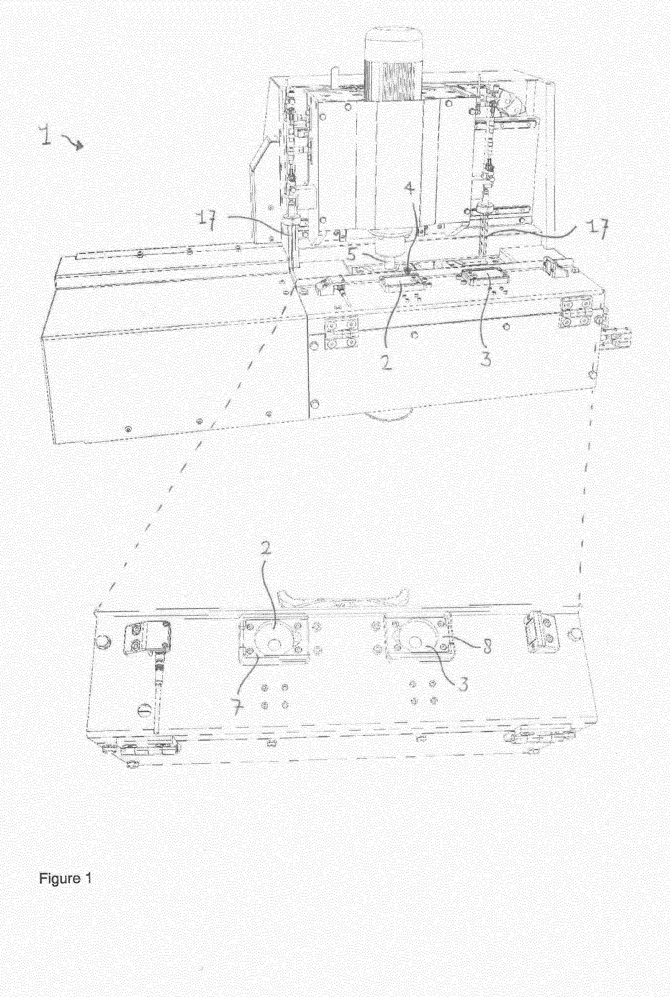

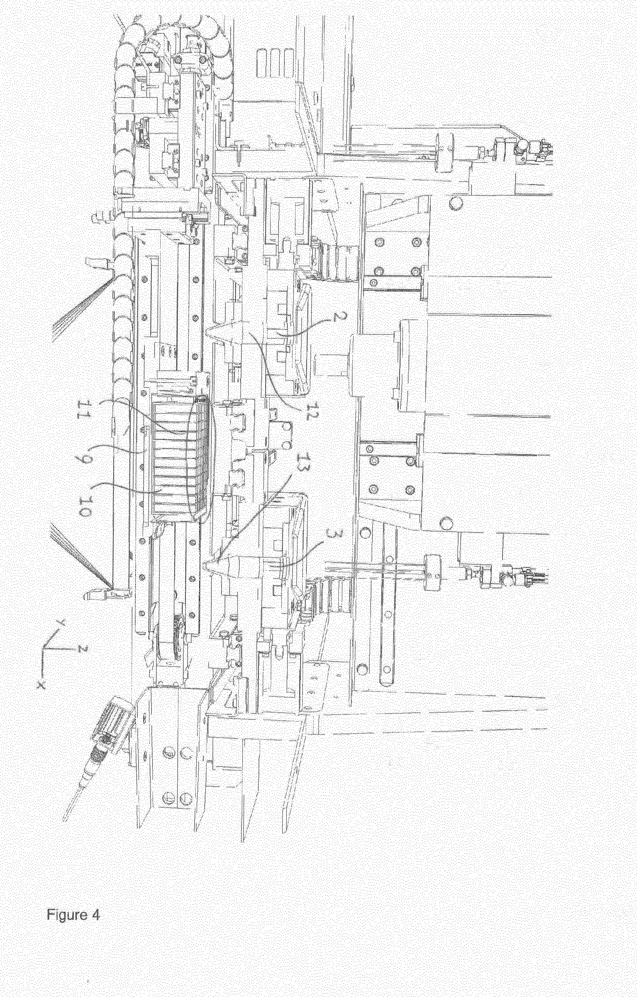

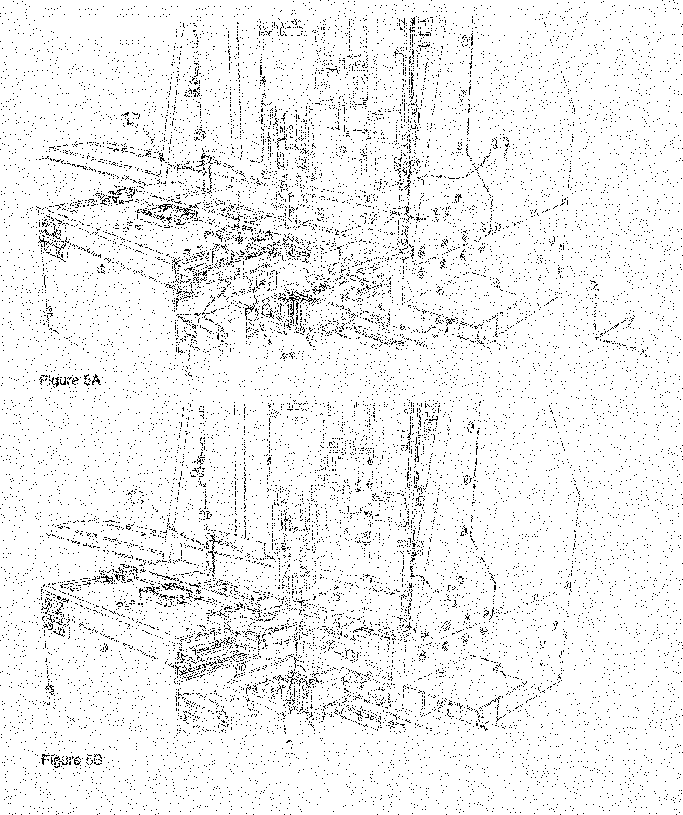

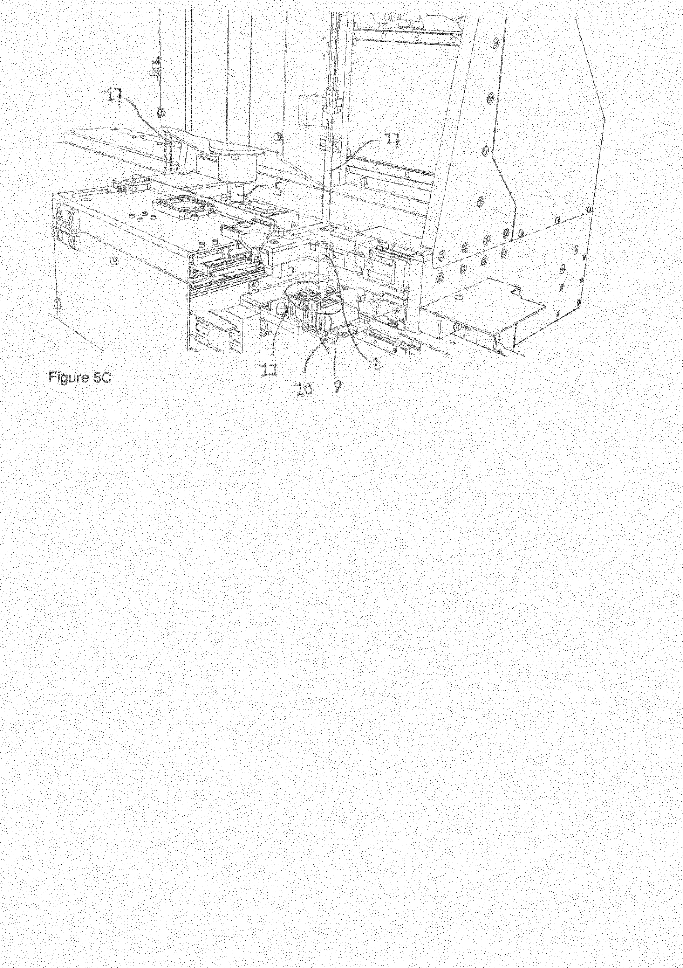

Figure 1 shows an overview of a seed crushing device 1 according to the invention, comprising two receiving spaces 2, 3 for seed grains, each defined by one circular side wall 2a, 3a. The device is designed to position the receiving spaces in a first position, depicted for receiving space 2 in figure 1 (and visible in more detail in Figure 5A), where the receiving space is freely accessible from its top side 4 for placing the seed grain in the receiving space 2, 3; and where the receiving space at its bottom is closed to support a seed grain that has been placed, and a second position (visible in more detail in Figure 5B), where the receiving space is freely accessible from its top side to accommodate a pestle 5 in the receiving space 2, 3, and where the receiving space at the bottom is closed for crushing the seed grain by pushing the pestle towards the bottom and for supporting the flower thus formed; and a third position (visible in more detail in Figure 5C), where the receiving space is free at at least the bottom for discharging the flower in a filling position from a deep well plate (visible in figure 4).

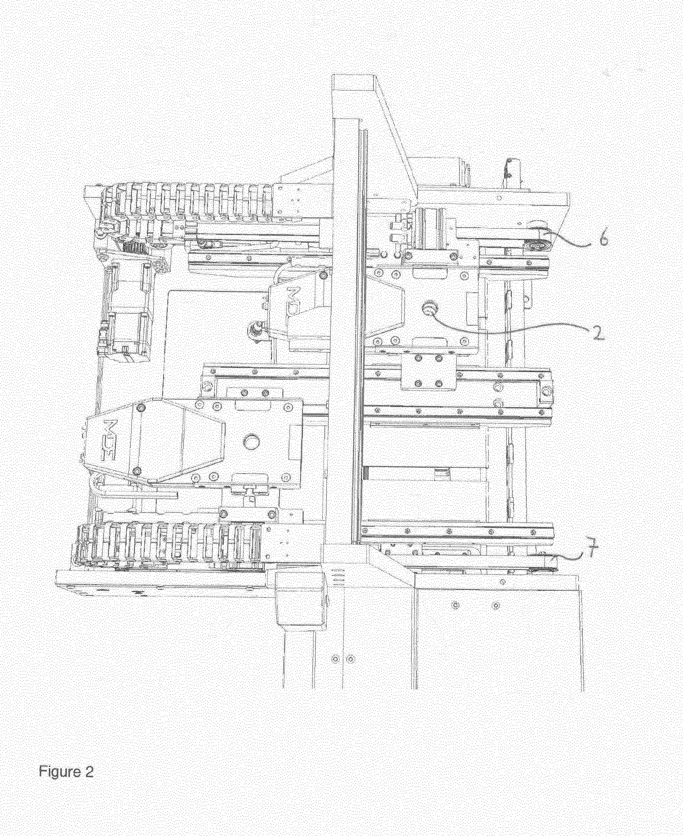

Figure 2 shows that the receiving spaces 2, 3 can be moved by relative displacement of said receiving spaces 2, 3, by means of a drive system 5, 6 with respect to a discharge opening of a filling funnel 7, 8 (visible in figure 1) opening onto the top of the receiving space 2, 3, wherein in a first position the top of the receiving space 2, 3 is aligned with the discharge opening of the filling funnel 7, 8. The receiving spaces 2, 3 can also be aligned with a descent position of a vertically movable pestle 5, wherein in a second position the top of the receiving space 2, 3 in the second position is aligned with the descent position of the pestle 5 (visible in figure 5B); and a receiving opening of a discharge channel, where in a third position the bottom of the receiving space 2, 3 is aligned with a receiving opening of the discharge channel (visible in figure 5C).

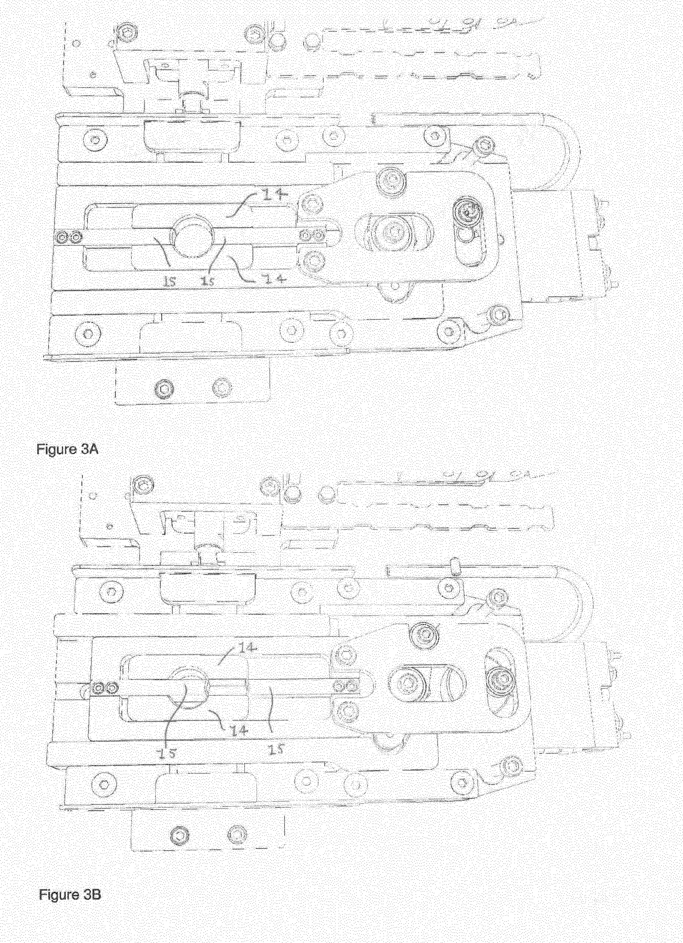

Figure 3 A and B show that the side walls of the receiving space 2, 3 comprise several parts 14, 15, which are mutually movable in order to break a crushed seed grain already contained therein.

Figure 4 shows that a carrier 9 for a deep well plate 10 with multiple filling positions 11, with the aid of which carrier 9 the deep well plate 10 can be moved relative to the receiving space 2, 3 in such a way that flower can be released in a selected filling position 11 when the receiving space 2, 3 is in the third position. The carrier is movable in the horizontal plane X-Y in order to align a selected receiving opening of a discharge channel 12, 13 with the bottom of the receiving space 2, 3 in the third position.

Figures 5A shows the receiving space 2 in a first position, where the receiving space 2 is freely accessible from its top side 4 for placing the seed grain in the receiving space 2 and where the receiving space at its bottom 16 is closed to support a seed grain that has been placed.

Figure 5B shows the receiving space 2 a second position, where the receiving space is freely accessible from its top side to accommodate a pestle 5 in the receiving space 2 wherein the receiving space 2 is closed at the bottom 16 for crushing the seed grain by pushing the pestle 5 towards the bottom 16 and for supporting the flower thus formed.

Figure 5C shows a third position where the receiving space 2 is free at its bottom 16 for discharging the flower in a filling position 11 from a deep well plate 10.

In the third position the receiving space 2 is aligned with a discharge channel 12 extending in a height direction Z, wherein the carrier 9 is movable with a vertical direction Z component, to accommodate a discharge opening 12 of the discharge channel 12 in the filling position of the deep well plate 10 for the purpose of discharging flower.

The receiving space 2 is freely accessible from its top 4 and bottom 16 in the third position, and the device 1 is further provided with an ejector 17, which is movable between a position in which it is located above the top of the receiving space 2, and a position in which it extends via the top 4 of the receiving space through the receiving space 2 through the discharge channel 12, into the filling position 11 of a placed deep well plate 10. The ejector 17 comprises an assembly of pins, with a central pin 18 surrounded by a number of further pins 19.

## Claims

1. Seed crushing device comprising:
• A receiving space for a seed grain,
∘ defined by one or more side walls,
∘ designed to be positioned in at least:
▪ A first position, where
• the receiving space is freely accessible from its top side for placing the seed grain in the receiving space; and where
• the receiving space at its bottom is closed to support a seed grain that has been placed;
▪ A second position, where
• the receiving space is freely accessible from its top side to accommodate a pestle in the receiving space, and where
• the receiving space at the bottom is closed for crushing the seed grain by pushing the pestle towards the bottom and for supporting the flower thus formed; and
▪ A third position, where
• the receiving space is free at at least the bottom for discharging the flower in a filling position from a deep well plate;
• a carrier for a deep well plate with multiple filling positions, with the aid of which carrier the deep well plate can be moved relative to the receiving space in such a way that flower can be released in a selected filling position when the receiving space is in the third position.

2. Device according to claim 1, wherein the receiving space can be moved by relative displacement of the receiving space with respect to at least two of:
- a discharge opening of a filling funnel opening onto the top of the receiving space, wherein in a first position the top of the receiving space is aligned with the discharge opening of the filling funnel;
- a descent position of a vertically movable pestle, wherein in a second position the top of the receiving space in the second position is aligned with the descent position of the pestle; and
- A receiving opening of a discharge channel, where in a third position the bottom of the receiving space is aligned with a receiving opening of the discharge channel.

3. Device according to claim 1 or 2, wherein the carrier is movable in the horizontal plane in order to align a selected receiving opening of a discharge channel with the bottom of the receiving space in the third position.

4. Device according to any of the preceding claims, wherein the receiving space in the third position is aligned with a discharge channel extending in a height direction, wherein the carrier is movable with a vertical direction component, to accommodate a discharge opening of the discharge channel in the filling position of the deep well plate for the purpose of discharging flower.

5. Device according to any of the preceding claims, wherein the receiving space is freely accessible from its top and bottom in the third position, and wherein the device is further provided with an ejector, which is movable between a position in which it is located above the top of the receiving space, and a position in which it extends via the top of the receiving space through the receiving space to the discharge channel, and preferably through the discharge channel and further preferably into the filling position of a placed deep well plate.

6. Device according to claim 5, wherein the ejector comprises a pin, preferably an assembly of pins, and further preferably a central pin surrounded by a number of further pins.

7. Device according to any of the preceding claims, comprising a fourth position, in which the receiving space is open at the top and/or the bottom, for cleaning the receiving space prior to a subsequent crushing step.

8. Device according to any of the preceding claims, wherein the receiving space is a first receiving space and wherein the device comprises a second receiving space for a seed grain defined by one or more side walls, also designed to be positioned in at least:
▪ A first position, where
• the second receiving space is freely accessible from its top side for placing the seed grain in the second receiving space; and where
• the second receiving space at its bottom is closed to support a seed grain that has been placed;
▪ A second position, where
• the second receiving space is freely accessible from its top side to accommodate a pestle in the second receiving space, and where
• the second receiving space at the bottom is closed for crushing the seed grain by pushing the pestle towards the bottom and for supporting the flower thus formed; and
▪ A third position, where
• the second receiving space is free at at least the bottom for discharging the flower in a filling position from a deep well plate;
wherein
- the device is configured to accommodate the pestle alternately in the first and the second receiving space.

9. Device according to claim 8, wherein the pestle is movable between the second position of the first receiving space and the second position of the second receiving space.

10. Device according to claim 9, wherein the pestle can be moved jointly with a first and a second ejector between a first position in which the pestle is aligned with the first receiving space and the first ejector with the second receiving space and a second position in which the pestle is aligned with the second receiving space and the second ejector with the first receiving space.

11. Device according to any of the preceding claims, comprising a receiving location for a quantity of seed grains, and a picker for picking up a single seed grain from the receiving location and administering the single seed grain to a receiving space located in a first position.

12. Device according to claim 11, comprising a counter for counting the number of seed grains at the receiving location, in particular comprising a camera and an image processing device for determining the number of seed grains on the basis of images made by the camera.

13. Device according to any of the preceding claims, provided with a funnel opening above a first position of a receiving space.

14. Device according to any of the preceding claims, wherein the side walls of the receiving space comprise several parts, which are mutually movable in order to break a crushed seed grain already contained therein.

## Amended claims

### Amended claims in accordance with Rule 137(2) EPC.

1. **Seed** crushing device (1) comprising:
• A receiving space (2,3) for a seed grain,
∘ defined by one or more side walls,
∘ designed to be positioned in at least:
▪ A first position, where
• the receiving space (2,3) is freely accessible from its top side (4) for placing the seed grain in the receiving space (2,3); and where
• the receiving space (2,3) at its bottom is closed to support a seed grain that has been placed;
▪ A second position, where
• the receiving space (2,3) is freely accessible from its top side (4) to accommodate a pestle in the receiving space, and where
• the receiving space (2,3) at the bottom is closed for crushing the seed grain by pushing a pestle (5) towards the bottom and for supporting the flower thus formed; and
▪ A third position, where
• the receiving space (2,3) is free at at least the bottom for discharging the flower in a filling position from a deep well plate; **characterized by**
• a carrier (9) for a deep well plate (10) with multiple filling positions, with the aid of which carrier (9) the deep well plate (10) can be moved relative to the receiving space (2,3) in such a way that flower can be released in a selected filling position when the receiving space is in the third position.

2. Device (1) according to claim 1, wherein the receiving space (2,3) can be moved by relative displacement of the receiving space with respect to at least two of:
- a discharge opening of a filling funnel opening onto the top of the receiving space (2,3), wherein in a first position the top of the receiving space (2,3) is aligned with the discharge opening of the filling funnel;
- a descent position of a vertically movable pestle (5), wherein in a second position the top of the receiving space (2,3) in the second position is aligned with the descent position of the pestle (5); and
- A receiving opening of a discharge channel, where in a third position the bottom of the receiving space (2,3) is aligned with a receiving opening of the discharge channel.

3. Device (1) according to claim 1 or 2, wherein the carrier is movable in the horizontal plane in order to align a selected receiving opening of a discharge channel with the bottom of the receiving space (2,3) in the third position.

4. Device (1) according to any of the preceding claims, wherein the receiving space (2,3) in the third position is aligned with a discharge channel extending in a height direction, wherein the carrier (9) is movable with a vertical direction component, to accommodate a discharge opening of the discharge channel in the filling position of the deep well plate (10) for the purpose of discharging flower.

5. Device (1) according to any of the preceding claims, wherein the receiving space (2,3) is freely accessible from its top and bottom in the third position, and wherein the device is further provided with an ejector, which is movable between a position in which it is located above the top of the receiving space (2,3), and a position in which it extends via the top of the receiving space through the receiving space (2,3) to the discharge channel, and preferably through the discharge channel and further preferably into the filling position of a placed deep well plate (10).

6. Device (1) according to claim 5, wherein the ejector comprises a pin, preferably an assembly of pins, and further preferably a central pin surrounded by a number of further pins.

7. Device (1) according to any of the preceding claims, comprising a fourth position, in which the receiving space (2,3) is open at the top and/or the bottom, for cleaning the receiving space prior to a subsequent crushing step.

8. Device (1) according to any of the preceding claims, wherein the receiving space is a first receiving space (2,3) and wherein the device comprises a second receiving space for a seed grain defined by one or more side walls, also designed to be positioned in at least:
▪ A first position, where
• the second receiving space (2,3) is freely accessible from its top side for placing the seed grain in the second receiving space; and where
• the second receiving space (2,3) at its bottom is closed to support a seed grain that has been placed;
• A second position, where
• the second receiving space (2,3) is freely accessible from its top side to accommodate a pestle in the second receiving space (2,3), and where
• the second receiving space (2,3) at the bottom is closed for crushing the seed grain by pushing the pestle (5) towards the bottom and for supporting the flower thus formed; and
▪ A third position, where
• the second receiving space (2,3) is free at at least the bottom for discharging the flower in a filling position from a deep well plate (10);
wherein
- the device is configured to accommodate the pestle (5) alternately in the first and the second receiving space.

9. Device (1) according to claim 8, wherein the pestle is movable between the second position of the first receiving space (2,3) and the second position of the second receiving space (2,3).

10. Device (1) according to claim 9, wherein the pestle (5) can be moved jointly with a first and a second ejector between a first position in which the pestle (5) is aligned with the first receiving space (2,3) and the first ejector with the second receiving space (2,3) and a second position in which the pestle (5) is aligned with the second receiving space (2,3) and the second ejector with the first receiving space (2,3).

11. Device (1) according to any of the preceding claims, comprising a receiving location for a quantity of seed grains, and a picker for picking up a single seed grain from the receiving location and administering the single seed grain to a receiving space (2,3) located in a first position.

12. Device (1) according to claim 11, comprising a counter for counting the number of seed grains at the receiving location, in particular comprising a camera and an image processing device for determining the number of seed grains on the basis of images made by the camera.

13. Device (1) according to any of the preceding claims, provided with a funnel opening above a first position of a receiving space (2,3).

14. Device (1) according to any of the preceding claims, wherein the side walls of the receiving space (2,3) comprise several parts, which are mutually movable in order to break a crushed seed grain already contained therein.
